# EUROPEAN PATENT APPLICATION

(11) **EP 3 187 541 A1**
(43) Date of publication of application: **05.07.2017**
(21) Application number: 15835997.6
(22) Date of filing: 26.08.2015
(51) Int. Cl.: C08L 69/00, B65H 75/00, C08K 3/00, C08L 25/04, C08L 33/10, C08L 55/02, C08L 67/04, C08L 71/12, C08L 81/06

(54) **WINDING CORE AND WINDING CORE MANUFACTURING METHOD**

(30) Priority: 29.08.2014 JP 2014175450
(71) Applicant: Toray Industries, Inc., Tokyo 103-8666 (JP)
(72) Inventor: NAITO, Yoshiyasu, Ichihara-shi Chiba 299-0196 (JP); NISHI, Takeshi, Nagoya-shi Aichi 455-8502 (JP); NITO, Taeko, Nagoya-shi Aichi 455-8502 (JP); TACHIKAWA, Koji, Nagoya-shi Aichi 455-8502 (JP)
(74) Representative: Kador & Partner
(86) International application number: PCT/JP2015/074032
(87) International publication number: WO 2016/031861

(57) **Abstract**

The present invention provides a winding core which is lightweight, and which has an excellent dimensional accuracy and deflection reducing property in a long length product. Provided is a winding core obtained by molding a resin composition comprising: at least one type of amorphous resin (A) selected from a styrene resin, a polycarbonate, a polyarylate, a polyphenylene oxide and a polysulfone; a polylactic acid (B); and an inorganic filler; wherein the resin composition includes: from 50 to 80 parts by mass of the amorphous resin (A), and from 20 to 50 parts by mass of the polylactic acid resin (B) (wherein the total amount of the amorphous resin (A) and the polylactic acid (B) is 100 parts by mass). Preferably, the winding core further includes from 10 to 40 parts by mass of the inorganic filler (C).

## Description

### TECHNICAL FIELD

The present invention relates to a winding core for winding a sheet, film, tape or the like into a roll, to allow transportation, storage and the like thereof. More specifically, the present invention relates to a winding core composed of a resin composition including at least one type of amorphous resin selected from a styrene resin, a polycarbonate, a polyarylate, a polyphenylene oxide and a polysulfone; and a polylactic acid; as materials, and to a method of manufacturing the same.

### BACKGROUND ART

Conventionally, a plastic core in the shape of a cylinder has been used as a winding core for winding a sheet, film, tape or the like.

Fiber reinforced plastics (FRP) obtained by reinforcing unsaturated polyesters with glass fibers, carbon fibers, aramid fibers or the like, and ABS are mainly used as resin materials for producing such plastic cores, but polyethylenes (PE), polystyrenes (PS), polypropylenes (PP), polyvinyl chlorides (PVC) and the like are also known.

Since FRP is capable of providing a product having an excellent cylindricity and high rigidity, it is possible to produce a highly reliable plastic core having an increased width and an increased amount of winding. However, a plastic core composed of FRP is very heavy, and thus associated with problems that it places a higher load on the motor of a winding machine, and that it consumes a significant amount of energy for the carriage and transportation of the core.

On the other hand, a plastic core composed of ABS, among cores composed of other resins, has been commonly used second to that composed of FRP, since ABS has a higher rigidity and dimensional accuracy as compared to other resins. However, deformation such as deflection or flattening of ABS plastic cores has been a problem, in recent years, as film-production facilities are increasingly operated at a higher speed, and a demand for capacity to wind an increased amount of a sheet or the like is growing.

Thus, there has been a need for a plastic core which is not as heavy as a FRP plastic core, and which has a better dimensional stability than an ABS plastic core. In view of this need, Patent Document 1 discloses, for example, a winding core including: an outer cylindrical portion; an inner cylindrical portion; and plate-like ribs radially disposed therebetween so as to connect the outer cylindrical portion and the inner cylindrical portion, in order to enhance the strength of the winding core, and to allow winding of a large amount of a belt-like product.

Patent Document 2 discloses a winding core having a two-layer structure composed of a layer made of a biodegradable resin, and a layer made of a crosslinked foamed product of a biodegradable resin having a low compression set, in order to reduce necking and irregularities which occur during the process of winding a sheet-like product to a core material, and to reduce the environmental load.

Patent Document 3 discloses a multi-layer resin core including an inner most layer and an outer layer in the form of a cylinder, which are composed of ABS resins having different properties, in order to prevent the generation of resin powder from the resin core, and to reduce the deformation of the resin core at the time of chucking.

Although Patent Documents 1 to 3 disclose efforts to improve the properties of plastic cores by laminating layers made of different materials, or by devising the external shape of the core, these efforts failed to provide sufficient effects, because of insufficient rigidity of the materials.

Further, Patent Document 4 discloses a resin composition including a polylactic acid resin and an aromatic polycarbonate resin.

### PRIOR ART DOCUMENTS

### PATENT DOCUMENTS

Patent Document 1: JP 2013-23290 A
Patent Document 2: JP 2004-43071 A
Patent Document 3: JP 2004-256277 A
Patent Document 4: WO 2006/030951

### SUMMARY OF THE INVENTION

### PROBLEMS TO BE SOLVED BY THE INVENTION

An object of the present invention is to provide a winding core which is lightweight, and which has an excellent dimensional accuracy, particularly, an excellent dimensional stability and deflection reducing property in a long length product (hereinafter, simply referred to as "deflection reducing property").

### MEANS FOR SOLVING THE PROBLEMS

The present inventors have made intensive studies in order to solve the above mentioned problems, thereby arriving at the following invention. Specifically, the present invention has the following constitutions:
(1) A winding core obtained by molding a resin composition comprising: at least one type of amorphous resin (A) selected from a styrene resin, a polycarbonate, a polyarylate, a polyphenylene oxide and a polysulfone; a polylactic acid (B); and an inorganic filler (C);
   wherein the resin composition comprises: from 50 to 80 parts by mass of the amorphous resin (A), from 20 to 50 parts by mass of the polylactic acid resin (B), and from 10 to 40 parts by mass of the inorganic filler (C) (wherein the total amount of the amorphous resin (A) and the polylactic acid (B) is 100 parts by mass).
(2) The winding core according to the above, wherein the inorganic filler (C) comprises talc.
(3) The winding core according to any one of the above, wherein the ratio of length [L] to inner diameter [D] (length [L]/inner diameter [D]) of the winding core is 2 or more.
(4) A winding core obtained by molding a resin composition comprising: at least one type of amorphous resin (A) selected from a styrene resin, a polycarbonate, a polyarylate, a polyphenylene oxide and a polysulfone; a polylactic acid (B); and an inorganic filler (C);
   wherein the ratio of length [L] to inner diameter [D] (length [L]/inner diameter [D]) of the winding core is 2 or more; and
   wherein the resin composition comprises: from 50 to 80 parts by mass of the amorphous resin (A), and from 20 to 50 parts by mass of the polylactic acid resin (B) (wherein the total amount of the amorphous resin (A) and the polylactic acid (B) is 100 parts by mass).
(5) The winding core according to any one of the above, wherein the resin composition further comprises from 2 to 10 parts by mass of a core-shell type rubber (D).
(6) The winding core according to any one of the above, wherein the resin composition further comprises from 2 to 10 parts by mass of a methacrylic resin (E).
(7) The winding core according to any one of the above, wherein the amorphous resin (A) comprises as an essential component a styrene resin (a1) or a polycarbonate (a2).
(8) A method of manufacturing a winding core, the method comprising the steps of:
   obtaining a resin composition comprising: at least one type of amorphous resin (A) selected from a styrene resin, a polycarbonate, a polyarylate, a polyphenylene oxide and a polysulfone; a polylactic acid resin (B); and an inorganic filler (C); by mixing from 50 to 80 parts by mass of the amorphous resin (A), from 20 to 50 parts by mass of the polylactic acid resin (B), and from 10 to 40 parts by mass of the inorganic filler (C) (wherein the total amount of the amorphous resin (A) and the polylactic acid (B) is 100 parts by mass); and
   molding the resin composition to obtain a winding core.
(9) A method of manufacturing a winding core, the method comprising the steps of:
   obtaining a resin composition comprising: at least one type of amorphous resin (A) selected from a styrene resin, a polycarbonate, a polyarylate, a polyphenylene oxide and a polysulfone; and a polylactic acid resin (B); by mixing from 50 to 80 parts by mass of the amorphous resin (A), and from 20 to 50 parts by mass of the polylactic acid resin (B) (wherein the total amount of the amorphous resin (A) and the polylactic acid (B) is 100 parts by mass); and
   molding the resin composition to obtain a winding core;
   wherein the ratio of length [L] to inner diameter [D] (length [L]/inner diameter [D]) of the winding core is 2 or more.
(10) The method of manufacturing a winding core according to any one of the above, wherein in the step of obtaining a resin composition, from 2 to 10 parts by mass of a core-shell type rubber (D) is further incorporated into the resin composition.
(11) The method of manufacturing a winding core according to any one of the above, wherein in the step of obtaining a resin composition, from 2 to 10 parts by mass of a methacrylic resin (E) is further incorporated into the resin composition.
(12) The method of manufacturing a winding core according to any one of the above, wherein the amorphous resin (A) comprises as an essential component a styrene resin or a polycarbonate.
(13) The method of manufacturing a winding core according to any one of the above, wherein the winding core is molded by an extrusion molding method.

### EFFECT OF THE INVENTION

According to the present invention, it is possible to provide a winding core which is lightweight, and which has an excellent dimensional stability, particularly, an excellent dimensional accuracy and deflection reducing property in a long length product.

### MODE FOR CARRYING OUT THE INVENTION

The winding core according to the present invention will now be specifically described. The resin composition in the present invention is capable of producing a winding core which is lightweight and which has an improved dimensional stability, due to including an amorphous resin (A). Further, due to including a polylactic acid resin (B), the resin composition is capable of producing a winding core having an improved rigidity, and thus, an improved dimensional stability.

Materials included in the resin composition in the present invention will now be described. When various types of resins to be described below are incorporated into the resin composition, the respective resins are not usually converted into other types of resins. Therefore, the resins incorporated into the resin composition are included therein in the same amounts as they are incorporated as materials.

### < Amorphous resin (A) >

The amorphous resin as used in the present invention refers to an amorphous resin whose melting peak is not observed in a calorimetric measurement using a differential scanning calorimeter (DSC). Whether a resin is the amorphous resin or not can be determined in the following manner. When the measurement of a resin is carried out using a differential scanning calorimeter (DSC) (DSC-60; manufactured by Shimadzu Corporation) at a measurement temperature range of from 40 to 280°C and at a temperature rise rate of 10°C/min, and if no melting (endothermic) peak is observed in a temperature range of from 200°C or more in the resulting DSC curve, the measured resin is the amorphous resin. The amorphous resin (A) to be used in the present invention is at least one type selected from a styrene resin, a polycarbonate, a polyarylate, a polyphenylene oxide and a polysulfone. Since no shrinkage associated with crystallization occurs in the above mentioned amorphous resins, these resins have an excellent dimensional stability.

### < Styrene resin (a1) >

A styrene resin (a1) which can be used as the amorphous resin (A) of the present invention is a polymer obtained by polymerization of a monomer which contains at least an aromatic vinyl monomer.

Example of the aromatic vinyl monomer include styrene, α-methylstyrene, p-methylstyrene, vinyl toluene, t-butylstyrene, o-ethylstyrene, o-chlorostyrene, o,p-dichlorostyrene, p-aminostyrene, and the like. Two or more kinds thereof may be used in combination. Of these, styrene or α-methylstyrene is preferably used.

The styrene resin may be a copolymer obtained by copolymerization of the above described aromatic vinyl monomer with another vinyl monomer(s) copolymerizable with the aromatic vinyl monomer. It is possible to impart properties such as chemical resistance or heat resistance to the resulting copolymer, by selecting the kind of the other vinyl monomer to be copolymerized with the aromatic vinyl monomer. Examples of the other vinyl monomer copolymerizable with the aromatic vinyl monomer include acrylonitrile, methacrylonitrile, ethacrylonitrile, (meth)acrylic acid, methyl (meth)acrylate, ethyl (meth)acrylate, n-propyl (meth)acrylate, n-butyl (meth)acrylate, t-butyl (meth)acrylate, n-hexyl (meth) acrylate, glycidyl (meth)acrylate, allyl glycidyl ether, styrene-p-glycidyl ether, p-glycidylstyrene (meth)acrylic acid 2-hydroxyethyl, 3-hydroxypropyl (meth)acrylate, 3-hydroxypropyl (meth)acrylate, 2,3,4,5,6-pentahydroxyhexyl (meth)acrylate, 2,3,4,5,6-pentahydroxyhexyl (meth)acrylate, 2,3,4,5-tetrahydroxypentyl (meth)acrylate, maleic acid, maleic anhydride, maleic acid monoethyl ester, itaconic acid, itaconic anhydride, phthalic acid, N-methylmaleimide, N-ethylmaleimide, N-cyclohexylmaleimide, N-phenylmaleimide, acrylamide, methacrylamide, N-methylacrylamide, butoxymethylacrylamide, N-propylmethacrylamide, aminoethyl acrylate, propylaminoethyl acrylate, dimethylaminoethyl methacrylate, ethylaminopropyl methacrylate, phenylaminoethyl methacrylate, cyclohexylaminoethyl methacrylate, N-vinyldiethylamine, N-acetylvinylamine, allylamine, methallylamine, N-methylallylamine, 2-isopropenyl-oxazoline, 2-vinyl-oxazoline, 2-acroyl-oxazoline, 2-styryl-oxazoline, and the like. Two or more kinds thereof may be used in combination. Of these, acrylonitrile or methyl methacrylate is particularly preferably used.

The proportion of a structure(s) derived from the aromatic vinyl monomer in 100% by mass of the styrene resin (a1) is preferably 10% by mass or more, and more preferably 20% by mass or more, in terms of molding processability. Further, the proportion of the structure derived from the aromatic vinyl monomer is preferably 100% by mass or less, and more preferably 90 % by mass or less.

The styrene resin (a1) is preferably a rubber modified styrene resin in which a rubbery polymer is dispersed in a matrix composed of an aromatic vinyl (co-)polymer. The use of such a resin serves to further improve the properties such as impact resistance of the resulting winding core. The resin as described above can be obtained by graft polymerization of a rubbery polymer with the aromatic vinyl monomer and the other vinyl monomer copolymerizable with the aromatic vinyl monomer. Also preferably used is a rubber modified styrene resin which contains: a vinyl copolymer obtained by copolymerization of the aromatic vinyl monomer and the other vinyl monomer copolymerizable with the aromatic vinyl monomer; and a graft copolymer obtained by graft polymerization of a rubbery polymer with the aromatic vinyl monomer and the other vinyl monomer copolymerizable with the aromatic vinyl monomer.

Examples of the rubbery polymer include: diene rubbers such as polybutadiene, a styrene-butadiene copolymer, an acrylonitrile-butadiene copolymer, a block copolymer of styrene-butadiene, and a butyl acrylate-butadiene copolymer; acrylic rubbers such as butyl polyacrylate; polyisoprenes; ethylene-propylene-diene terpolymers; and the like. Two or more kinds thereof may be used in combination. In particular, polybutadiene and a butadiene copolymer are preferably used.

Examples of the styrene resin (a1) include PS (polystyrene), HIPS (high-impact polystyrene), an AS (acrylonitrile/styrene) resin, an ASA (acrylonitrile/styrene/acrylate) resin, an AES (acrylonitrile/ethylene/styrene) resin, an ABS (acrylonitrile/butadiene/styrene) resin, a MAS (methyl methacrylate/acrylonitrile/styrene) resin, a MS (methyl methacrylate/styrene) resin, a MABS (methyl methacrylate/acrylonitrile/butadiene/styrene) resin, a MBS (methyl methacrylate/butadiene/styrene) resin, and the like. Two or more of these may be included. Of these, an ABS resin (hereinafter referred to as "a1-1") or an AS resin (hereinafter referred to as "a1-2") is preferred.

The styrene resin (a1) preferably has a weight average molecular weight of from 50,000 to 300,000, in terms of balancing mechanical properties such as moldability and mechanical strength at a higher level. The weight average molecular weight of the styrene resin as used herein refers to a value in terms of polystyrene, as measured by gel permeation chromatography (GPC) using tetrahydrofuran as a solvent.

The method of manufacturing the styrene resin (a1) is not particularly limited, and a method such as a bulk polymerization method, a suspension polymerization method, an emulsion polymerization method, or a bulk-suspension polymerization method can be used. The styrene resin (a1) may also be manufactured by melt blending one or more styrene resins obtained by any of the above mentioned methods.

In the case of including the styrene resin (a1), the amount of the styrene resin (a1) in 100% by mass of the amorphous resin (A) is preferably 50% by mass or more, more preferably 60% by mass or more, and still more preferably 80% by mass or more.

### < Polycarbonate (a2) >

A polycarbonate (a2) which can be used as the amorphous resin (A) of the present invention is, specifically, a thermoplastic resin obtainable by reacting a divalent or higher-valent phenolic compound with phosgene or a carbonic acid diester compound such as diphenyl carbonate.

The divalent or higher-valent phenolic compound is not particularly limited, and examples thereof include the following compounds.
Examples of the divalent phenolic compound include the following: dihydroxydiarylalkane compounds such as: 2,2-bis(4-hydroxyphenyl)propane (common name: bisphenol A), bis(4-hydroxyphenyl)methane, bis(4-hydroxyphenyl)phenylmethane, bis(4-hydroxyphenyl)naphthylmethane, bis(4-hydroxyphenyl)-(4-isopropylphenyl)methane, bis(3,5-dichloro-4-hydroxyphenyl)methane, bis(3,5-dimethyl-4-hydroxyphenyl)methane, 1,1-bis(4-hydroxyphenyl)ethane, 1-naphthy1-1,1-bis(4-hydroxyphenyl)ethane, 1-phenyl-1,1-bis(4-hydroxyphenyl)ethane, 1,2-bis(4-hydroxyphenyl)ethane, 2-methyl-1,1-bis(4-hydroxyphenyl)propane, 2,2-bis(3,5-dimethyl-4-hydroxyphenyl)propane, 1-ethyl-1,1-bis(4-hydroxyphenyl)propane, 2,2-bis(3,5-dichloro-4-hydroxyphenyl)propane, 2,2-bis(3,5-dibromo-4-hydroxyphenyl)propane, 2,2-bis(3-chloro-4-hydroxyphenyl)propane, 2,2-bis(3-methyl-4-hydroxyphenyl)propane, 2,2-bis(3-fluoro-4-hydroxyphenyl)propane, 1,1-bis(4-hydroxyphenyl)butane, 2,2-bis(4-hydroxyphenyl)butane, 1,4-bis(4-hydroxyphenyl)butane, 2,2-bis(4-hydroxyphenyl)pentane, 4-methyl-2,2-bis(4-hydroxyphenyl)pentane, 2,2-bis(4-hydroxyphenyl)hexane, 4,4-bis(4-hydroxyphenyl)heptane, 2,2-bis(4-hydroxyphenyl)nonane, 1,10-bis(4-hydroxyphenyl)decane, 1,1-bis(4-hydroxyphenyl)-3,3,5-trimethylcyclohexane, 2,2-bis(4-hydroxyphenyl)-1,1,1,3,3,3-hexafluoropropane, and the like;
dihydroxydiaryl sulfone compounds such as: bis(4-hydroxyphenyl) sulfone, bis(3,5-dimethyl-4-hydroxyphenyl) sulfone, and bis(3-chloro-4-hydroxyphenyl) sulfone; dihydroxydiarylcycloalkane compounds such as: 1,1-bis(4-hydroxyphenyl)cyclohexane, 1,1-bis(3,5-dichloro-4-hydroxyphenyl)cyclohexane, and 1,1-bis(4-hydroxyphenyl)cyclodecane;
dihydroxydiaryl ether compounds such as: bis(4-hydroxyphenyl) ether, and bis(3,5-dimethyl-4-hydroxyphenyl) ether;
dihydroxydiaryl ketone compounds such as 4,4'-dihydroxybenzophenone, and 3,3',5,5'-tetramethyl-4,4'-dihydroxybenzophenone;
dihydroxydiaryl sulfide compounds such as bis(4-hydroxyphenyl) sulfide, bis(3-methyl-4-hydroxyphenyl) sulfide, and bis(3,5-dimethyl-4-hydroxyphenyl) sulfide; dihydroxydiphenyl compounds such as 4,4'-dihydroxydiphenyl; dihydroxydiaryl sulfoxide compounds such as bis(4-hydroxyphenyl) sulfoxide; dihydroxyarylfluorene compounds such as 9,9-bis(4-hydroxyphenyl)fluorene; dihydroxybenzene compounds such as hydroquinone, resorcinol, and methylhydroquinone; and
dihydroxynaphthalene compounds such as: 1,5-dihydroxynaphthalene, and 2,6-dihydroxynaphthalene.

A trivalent or higher-valent phenolic compound can also be used as long as the resulting polycarbonate maintains thermoplastic properties. Examples of the trivalent or higher-valent phenolic compound include the following: 2,4,4'-trihydroxybenzophenone, 2,2',4,4'-tetrahydroxybenzophenone, 2,4,4'-trihydroxyphenyl ether, 2,2',4,4'-tetrahydroxyphenyl ether, 2,4,4'-trihydroxydiphenyl-2-propane, 2,2'-bis(2,4-dihydroxy)propane, 2,2',4,4'-tetrahydroxydiphenylmethane, 2,4,4'-trihydroxydiphenylmethane, 1-[α-methyl-α-(4'-dihydroxyphenyl)ethyl]-3-[α',α'-bis(4"-hydroxyphenyl)ethyl]benzene, 1-[α-methyl-α- (4'-dihydroxyphenyl)ethyl]-4-[α',α'-bis(4"-hydroxyphenyl)ethyl]benzene, α,α',α"-tris(4-hydroxyphenyl)-1,3,5-triisopropylbenzene, 2,6-bis(2-hydroxy-5'-methylbenzyl)-4-methylphenol, 4,6-dimethyl-2,4,6-tris(4'-hydroxyphenyl)-2-heptene, 4,6-dimethyl-2,4,6-tris(4'-hydroxyphenyl)-2-heptane, 1,3,5-tris(4'-hydroxyphenyl)benzene, 1,1,1-tris(4-hydroxyphenyl)ethane, 2,2-bis[4,4-bis(4'-hydroxyphenyl)cyclohexyl]propane, 2,6-bis(2'-hydroxy-5'-isopropylbenzyl)-4-isopropylphenol, bis[2-hydroxy-3-(2'-hydroxy-5'-methylbenzyl)-5-methylphenyl]methane, bis[2-hydroxy-3-(2'-hydroxy-5'-isopropylbenzyl)-5-methylphenyl]methane, tetrakis(4-hydroxyphenyl)methane, tris(4-hydroxyphenyl)phenylmethane, 2',4',7-trihydroxyflavan, 2,4,4-trimethyl-2',4',7-trihydroxyflavan, 1,3-bis(2',4'-dihydroxyphenylisopropyl)benzene, and tris(4'-hydroxyphenyl)-amyl-s-triazine.

The divalent or higher-valent phenolic compounds as described above may be used singly, or two or more kinds may be used in combination.

The polycarbonate (a2) can be obtained by including a component for making the polycarbonate (a2) a branched polycarbonate resin, other than the trivalent or higher-valent phenolic compound as described above, to the extent that the effect of the present invention is not impaired. Examples of materials as branching agents other than the trivalent or higher-valent phenolic compound, which are used for obtaining the above mentioned branched polycarbonate resin include phloroglucinol, mellitic acid, trimellitic acid, trimellitic acid chloride, trimellitic anhydride, gallic acid, n-propyl gallate, protocatechuic acid, pyromellitic acid, pyromellitic dianhydride, α-resorcinol acid , β-resorcinol acid, resorcinol aldehyde, trimethylchloride, isatin bis(o-cresol), trimethyl trichloride, 4-chloroformyl phthalic anhydride, and benzophenone tetracarboxylic acid.

In addition to the above, a straight-chain aliphatic divalent carboxylic acid such as adipic acid, pimelic acid, suberic acid, azelaic acid, sebacic acid, or decanedicarboxylic acid, for example, may be used as a copolymerization component of the polycarbonate (a2) to be used the present invention.

As a part of raw materials for the polycarbonate (a2) to be used in the present invention, it is possible to use any of various types of known compounds which are used as terminal stopping agents in the polymerization, as necessary, to the extent that the effect of the present invention is not impaired. Examples thereof include monovalent phenolic compounds such as phenol, p-cresol, p-t-butylphenol, p-t-octylphenol, p-cumylphenol, bromophenol, tribromophenol, and nonylphenol.

Examples of the carbonic acid diester compound which can be used as a raw material for the polycarbonate (a2) include diaryl carbonates such as diphenyl carbonate; and dialkyl carbonates such as dimethyl carbonate and diethyl carbonate.

Specific preferred examples of the polycarbonate (a2) to be used in the present invention include a polycarbonate obtained by an interfacial polycondensation method in which bisphenol A is reacted with phosgene; and a polycarbonate obtained by a melt polymerization method in which bisphenol A is reacted with diphenyl carbonate.

In cases where the skeleton of the polycarbonate (a2) includes a bisphenol A skeleton, the polycarbonate resin preferably has a terminal phenolic hydroxyl group content of 0.5 × 10⁻² mol or more, more preferably 0.7 × 10⁻² mol or more, and still ore preferably 0.9 × 10⁻² mol or more, per 1 mol of the bisphenol A skeleton, in terms of improving the dimensional stability of the winding core of the present invention. The terminal phenolic hydroxyl group content of the polycarbonate resin per 1 mol of the bisphenol A skeleton can be calculated by ¹H-NMR measurement or the like. In other words, in the ¹H-NMR spectra, the peak of the methyl group of bisphenol A is observed within the range of δ from 1.66 to 1.70 ppm, and the peak of the terminal phenolic hydroxyl group of bisphenol A is observed within the range of δ from 4.70 to 4.80 ppm. From the ratio of the peak strength of these peaks, the terminal phenolic hydroxyl group content per 1 mol of the bisphenol A skeleton can be obtained.

A polycarbonate having a terminal phenolic hydroxyl group content within the above mentioned range can be manufactured by a method such as a melt polymerization method in which bisphenol A is reacted with diphenyl carbonate without using a terminal stopping agent.

Specific examples of the manufacturing method include a method in which: bisphenol A, diphenyl carbonate, a basic catalyst, and an acidic compound for neutralizing the basic catalyst are introduced into a reaction vessel; the resulting mixture is melted under an inert gas atmosphere, and subjected to gradual pressure reduction and gradual temperature elevation while stirring; and polymerization is allowed to proceed while removing the generated phenol.

The polycarbonate (a2) to be used in the present invention preferably has a number average molecular weight (Mn) of 3,000 or more, more preferably 4,000 or more, and still more preferably 5,000 or more. At the same time, the polycarbonate (a2) preferably has a number average molecular weight (Mn) of 30,000 or less, and more preferably 25,000 or less. The number average molecular weight (Mn) as used herein refers to a number average molecular weight in terms of PMMA, obtained by dissolving the polycarbonate in tetrahydrofuran and performing a measurement by gel permeation chromatography (GPC).

In the case of including the polycarbonate (a2), the amount of the polycarbonate (a2) in 100% by mass of the amorphous resin (A) is preferably 50% by mass or more, more preferably 60% by mass or more, and still more preferably 80% by mass or more.

### < Polyarylate (a3) >

A polyarylate (a3) which can be used as the amorphous resin (A) of the present invention is a polyester obtainable by reacting an aromatic dicarboxylic acid with a bisphenol. The polyarylate (a3) can be manufactured by a known method such as melt polymerization or interfacial polymerization.

Examples of the aromatic dicarboxylic acid which can be used as a raw material for the polyarylate (a3) include terephthalic acid, isophthalic acid, phthalic acid, 2,5-naphthalenedicarboxylic acid, 2,6-naphthalenedicarboxylic acid, 2,7-naphthalenedicarboxylic acid, 1,5-naphthalenedicarboxylic acid, methylterephthalic acid, 4,4'-biphenyldicarboxylic acid, 2,2'-biphenyldicarboxylic acid, 4,4'-biphenylether dicarboxylic acid, 4,4'-diphenylmethanedicarboxylic acid, 4,4'-diphenylsulfonedicarboxylic acid, 4,4'-diphenylisopropylidenedicarboxylic acid, 1,2-bis(4-carboxyphenoxy)ethane, and 5-sodium sulfoisophthalic acid. Of these, terephthalic acid or isophthalic acid is preferred. Further, it is more preferred that both of terephthalic acid and isophthalic acid be used in combination, in terms of melting processability of the resin composition and the mechanical properties of the resulting winding core. The mixing molar ratio (terephthalic acid /isophthalic acid) of terephthalic acid to isophthalic acid can be selected arbitrarily within the range of from 100/0 to 0/100. The mixing molar ratio (terephthalic acid /isophthalic acid) of terephthalic acid to isophthalic acid is preferably 30/70 or more, and more preferably 40/60 or more, in terms of polymerizability in the interfacial polymerization. At the same time, the mixing molar ratio (terephthalic acid /isophthalic acid) of terephthalic acid to isophthalic acid is preferably 70/30 or less, and more preferably 60/40 or less, in terms of polymerizability in the interfacial polymerization. Further, when focused on the properties of the resulting polyarylate, an increased ratio of isophthalic acid tends to result in a reduced light discoloration of the resulting polyacrylate, and an increased ratio of terephthalic acid tends to result in an improved heat resistance of the resulting polyarylate resin.

Examples of the bisphenol which can be used as the other raw material of the polyarylate (a3) include 2,2-bis(4-hydroxyphenyl)propane [also known as bisphenol A], 2-phenyl-3,3-bis(4-hydroxyphenyl)phthalimidine, 4,4'-(3,3,5-trimethylcyclohexylidene)diphenol, 2,2-bis(4-hydroxy-3,5-dimethylphenyl)propane, 2,2-bis(4-hydroxy-3,5-dibromophenyl)propane, 2,2-bis(4-hydroxy-3,5-dichlorophenyl)propane, 4,4'-dihydroxydiphenyl sulfone, 4,4'-dihydroxydiphenyl ether, 4,4'-dihydroxydiphenyl sulfide, 4,4'-dihydroxydiphenyl ketone, 4,4'-dihydroxydiphenylmethane, and 1,1-bis(4-hydroxyphenyl)cyclohexane. These bisphenols may be used singly, or two or more kinds thereof may be used as a mixture. Of these, it is preferred that 2,2-bis(4-hydroxyphenyl)propane be used, in terms of polymerizability and economic efficiency. Further, in terms of heat resistance, it is preferred that 2-phenyl-3,3-bis(4-hydroxyphenyl)phthalimidine or 4,4'-(3,3,5-trimethylcyclohexylidene)diphenol be used.

### < Polyphenylene oxide (a4) >

A polyphenylene oxide (a4) which can be used as the amorphous resin (A) of the present invention is not particularly limited. Examples thereof include poly(2,6-dimethyl-1,4-phenylene ether), poly(2-methyl-6-ethyl-1,4-phenylene ether), poly(2-methyl-6-phenyl-1,4-phenylene ether), poly(2,6-dichloro-1,4-phenylene ether), and the like. Examples of the polyphenylene oxide (a4) also include a polyphenylene ether copolymer such as a copolymer of 2,6-dimethylphenol and another phenol (for example, 2,3,6-trimethylphenol or 2-methyl-6-butylphenol). Of these, poly(2,6-dimethyl-1,4-phenylene ether), and a copolymer of 2,6-dimethylphenol and 2,3,6-trimethylphenol is preferred. More preferred is poly(2,6-dimethyl-1,4-phenylene ether).

The method for manufacturing the polyolefin oxide (a4) is not particularly limited. Examples thereof include a method disclosed in US Patent No. 3306874, in which 2,6-xylenol, for example, is subjected to oxidative polymerization, using a complex of cuprous salt and amine as a catalyst. Examples of the manufacturing method also include, in addition to the above, methods disclosed in US Patent Nos. 3306875, 3257357, and 3257358.

### < Polysulfone (a5) >

A polysulfone (a5) which can be used as the amorphous resin (A) of the present invention is a polyarylene compound which comprises an arylene unit, an ether bond (-O-) and a sulfone bond (-SO₂-) as essential components, and in which the arylene units are arranged randomly or orderly via the ether and sulfone bonds.

The polysulfone (a5) to be used in the present invention can be manufactured by subjecting a corresponding bis(haloaryl) sulfone compound and a bis(hydroxyaryl) compound to a dehydrohalogenation reaction using a base, to allow polycondensation to take place.

Examples of commercially available products of the polysulfone (a5) include "SUMIKAEXCEL (registered trademark) PES 3600P" and "SUMIKAEXCEL (registered trademark) PES 4100P", both manufactured by Sumitomo Chemical Company, Limited, and "UDEL P-1700" manufactured by Amoco Corporation. The terminal group of the polysulfone can be selected as appropriate depending on the manufacturing method of the polysulfone, and examples of the terminal group include halogen atom, hydroxyl group, and alkoxyl groups.

### < Amorphous resin (A) >

The amorphous resin (A) in the present invention is preferably the styrene resin (a1) and/or the polycarbonate (a2). In cases where the styrene resin is used as the amorphous resin, a winding core which is excellent in lightweight property, in particular, can be obtained. In cases where the polycarbonate is used as the amorphous resin, a winding core having an excellent dimensional stability, in particular, can be obtained. Therefore, it is preferred that amorphous resin (A) include as an essential component(s) the styrene resin (a1) and/or the polycarbonate (a2).

It is also possible to use two or more kinds of the amorphous resins in combination. For example, in cases where the styrene resin (a1) and the polycarbonate (a2) are used in combination, a winding core having an excellent dimensional accuracy and lightweight property in a balanced manner can be obtained, and therefore preferred. In this case, it is preferred that the total amount of the styrene resin (a1) and the polycarbonate (a2) contained in 100% by mass of the amorphous resin (A) be preferably 70% by mass or more.

### < Polylactic acid resin (B) >

The polylactic acid resin (B) to be used in the present invention is a polymer obtainable using L-lactic acid and/or D-lactic acid as a main raw material(s). However, the polylactic acid resin (B) may include another copolymerization component other than lactic acid to the extent that the object of the present invention is not impaired. Examples of the other copolymerization component unit include polycarboxylic acids, polyols, hydroxycarboxylic acids, and lactones. Specific examples thereof include: polycarboxylic acids such as oxalic acid, malonic acid, succinic acid, glutaric acid, adipic acid, azelaic acid, sebacic acid, dodecanedioic acid, fumaric acid, cyclohexane dicarboxylic acid, terephthalic acid, isophthalic acid, phthalic acid, 2,6-naphthalenedicarboxylic acid, 5-sodium sulfoisophthalic acid, and 5-tetrabutylphosphonium sulfoisophthalic acid; polyols such as ethylene glycol, propylene glycol, butanediol, heptanediol, hexanediol, octanediol, nonanediol, decanediol, 1,4-cyclohexanedimethanol, neopentyl glycol, glycerin, trimethylolpropane, pentaerythritol, bisphenol A, an aromatic polyol obtained by addition reaction of ethylene oxide to a bisphenol, diethylene glycol, triethylene glycol, polyethylene glycol, polypropylene glycol, and polytetramethylene glycol; hydroxycarboxylic acids such as glycolic acid, 3-hydroxybutyric acid, 4-hydroxybutyric acid, 4-hydroxyvaleric acid, 6-hydroxycaproic acid, and hydroxybenzoic acid; and lactons such as glycolide, ε-caprolactone glycolide, ε-caprolactone, β-propiolactone, δ-butyrolactone, β- and γ-butyrolactones, pivalolactone, and δ-valerolactone; and the like. These copolymerization components can be used singly, or two or more kinds thereof may be used.

In terms of heat resistance, the polylactic acid resin (B) to be used in the present invention is preferably composed of a lactic acid having a higher optical purity, as a raw material. Further, it is preferred that L-lactic acid or D-lactic acid be contained in an amount of 80% by mole or more, more preferably 90% by mole or more, and particularly preferably 95% by mole or more, with respect to the total amount of lactic acid components. The upper limit of the amount of L-lactic acid or D-lactic acid with respect to the total lactic acid components is 100% by mole, but it is preferably 99.9% mole or less, more preferably 99.5% by mole or less, and still more preferably 98% by mole or less.

Further, in one of the preferred embodiments, a stereo-complex of polylactic acid is used, so as to improve the deflection reducing property in a long length product. Examples of methods for forming the stereo-complex of polylactic acid include a method in which poly-L-lactic acid containing 90% by mole or more, preferably 95% by mole or more, and more preferably 98% by mole or more of L-lactic acid, and a poly-D-lactic acid containing 90% by mole or more, preferably 95% by mole or more, and more preferably 98% by mole or more of D-lactic acid, are mixed by melt blending or solution mixing. Further, other examples thereof include a method in which a poly-L-lactic acid and a poly-D-lactic acid are copolymerized to form a block copolymer. The method of copolymerizing a poly-L-lactic acid and a poly-D-lactic acid to form a block copolymer is preferred, since it allows for an easy formation of the stereo-complex of polylactic acid.

The polylactic acid resin (B) to be used in the present invention can be manufactured by a known polymerization method, and examples thereof include direct polymerization from lactic acid, and ring-opening polymerization via lactide.

The molecular weight or the molecular weight distribution of the polylactic acid resin (B) to be used in the present invention is not particularly limited, as long as the polylactic acid resin (B) is substantially mold-processable. However, the polylactic acid resin (B) preferably has a weight average molecular weight of 10,000 or more, more preferably 40,000 or more, and particularly preferably 80,000 or more. The weight average molecular weight as used herein refers to a weight average molecular weight in terms of polymethyl methacrylate (PMMA), as measured by gel permeation chromatography (GPC) using hexafluoroisopropanol as a solvent.

The melting point of the polylactic acid resin (B) to be used in the present invention is not particularly limited. However, the polylactic acid resin (B) preferably has a melting point of 90°C or higher, and more preferably 150°C or higher.

### < Blending amounts of amorphous resin (A) and polylactic acid resin (B) >

The resin composition to be used as the material of the winding core of the present invention includes from 50 to 80 parts by mass of the above mentioned amorphous resin (A) and from 20 to 50 parts by mass of the above mentioned polylactic acid resin (B), with respect to 100 parts by mass of the total amount of the amorphous resin (A) and the polylactic acid resin (B). When the blending amounts of amorphous resin (A) and the polylactic acid resin (B) to be included in the resin composition are within the above described ranges, the resin composition excellent in the balance between strength and toughness can be obtained, and a winding core obtained by molding the resin composition is lightweight, and has an excellent dimensional stability. The resin composition preferably includes 55 parts by mass or more of the amorphous resin (A) and 45 parts by mass or less of the polylactic acid resin (B), in terms of further improving the deflection reducing property in a long length product and the dimensional stability. In terms of further improving the lightweight property, the resin composition more preferably includes 57 parts by mass or more of the amorphous resin (A) and 43 parts by mass or less of the polylactic acid resin (B). At the same time, the resin composition preferably includes 70 parts by mass or less of the amorphous resin (A) and 30 parts by mass or more of the polylactic acid resin (B), in terms of further improving the deflection reducing property in a long length product and the dimensional stability. In terms of further improving the balance between the lightweight property and other properties, the resin composition more preferably contains 65 parts by mass or less of the amorphous resin (A) and 35 parts by mass or more of the polylactic acid resin (B).

Further, in cases where the amorphous resin (A) includes the styrene resin (a1) and the polycarbonate (a2) as essential components, it is preferred that the total amount of the styrene resin (a1) and the polycarbonate (a2) contained in 100% by mass of the amorphous resin (A) be 70% by mass or more.

### < Core-shell type rubber (D) >

In the present invention, the resin composition can include a core-shell type rubber (D). Incorporation of the core-shell type rubber (D) serves to improve the cylindricity of the winding core of the present invention, and to further impart an impact resistance to the winding core.

The core-shell type rubber (D) in the present invention is a polymer in the form of particles, obtained by graft polymerization of rubber with a vinyl monomer, wherein each of the particles includes an internal core portion made from rubber and an external shell layer, having different compositions. In the particle, another layer(s) may be present between the core portion and the outermost shell layer.

The type of the rubber constituting the core portion of the core-shell type rubber (D) is not particularly limited, and any rubber can be used as long as it is composed of a polymer component having rubber elasticity. The core-shell type rubber (D) may be, for example, a rubber obtained from a polymerization product of an acrylic component, a silicone component, a nitrile component, a conjugated diene component, an urethane component, an ethylene propylene component, or the like. A preferred rubber may be, for example, a rubber composed of a polymerization product of: an acrylic component such as an ethyl acrylate unit or a butyl acrylate unit; a silicone component such as dimethylsiloxane unit or a phenylmethylsiloxane unit; a nitrile component such as an acrylonitrile unit or a methacrylonitrile unit; or a conjugated diene component such as a butadiene unit or an isoprene unit. Also preferred is a rubber composed of a copolymerization product of two or more types of the above mentioned components.

Specific examples of more preferred rubbers are as follows:
a rubber composed of a component obtained by polymerization of an acrylic component such as an ethyl acrylate unit or a butyl acrylate unit; a rubber composed of a component obtained by polymerization of a silicone component such as a dimethylsiloxane unit or a phenylmethylsiloxane unit; and a combination thereof, namely, a rubber composed of a component obtained by copolymerization of an acrylic component such as an ethyl acrylate unit or a butyl acrylate unit, and a silicone component such as dimethylsiloxane unit or a phenylmethylsiloxane unit. The most preferred is a rubber composed of a component obtained by polymerization of an acrylic component such as an ethyl acrylate unit or a butyl acrylate unit.

In the core-shell type rubber, the shell layer may be a product obtained by graft polymerization with at least one type of monomer selected from unsaturated carboxylic acid alkyl ester monomers, unsaturated dicarboxylic anhydride monomers, aliphatic vinyl monomers, vinyl cyanide monomers, maleimide monomers, unsaturated dicarboxylic acid monomers, other vinyl monomers and the like, in addition to glycidyl group-containing vinyl monomers such as glycidyl acrylate and glycidyl methacrylate. Of these, the shell layer is preferably a product obtained by graft polymerization with a monomer containing at least one type of monomer selected from unsaturated carboxylic acid alkyl ester monomers and unsaturated dicarboxylic anhydride monomers. Note that, however, in cases where the core-shell type rubber has a structure derived from an aromatic vinyl monomer, and is amorphous, the core-shell type rubber is classified as the above described styrene resin (a1), in order to clarify the definition.

The unsaturated carboxylic acid alkyl ester monomer is not particularly limited, and a (meth)acrylic acid alkyl ester is preferably used. Specific examples thereof include methyl (meth)acrylate, ethyl (meth)acrylate, n-propyl (meth)acrylate, n-butyl (meth)acrylate, t-butyl (meth)acrylate, n-hexyl (meth)acrylate, 2-ethylhexyl (meth)acrylate, cyclohexyl (meth)acrylate, stearyl (meth)acrylate, octadecyl (meth)acrylate, phenyl (meth)acrylate, benzyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate, 2,3,4,5-tetrahydroxypentyl (meth)acrylate, aminoethyl acrylate, propylaminoethyl acrylate, dimethylaminoethyl methacrylate, ethylaminopropyl methacrylate, phenylaminoethyl methacrylate, cyclohexylaminoethyl methacrylate, and the like. Of these, methyl (meth)acrylate is preferably used, because it allows for a greater improvement in the impact resistance. One or more of these monomers can be used.

Examples of the unsaturated dicarboxylic anhydride monomer include maleic anhydride, itaconic anhydride, glutaconic anhydride, citraconic anhydride, aconitic anhydride, and the like. Of these, maleic anhydride is preferably used because it allows for a greater improvement in the impact resistance. One or more than one of these monomer units can be used.

Further, examples of the aliphatic vinyl monomer include ethylene, propylene, butadiene, and the like. Examples of the vinyl cyanide monomer include acrylonitrile, methacrylonitrile, ethacrylonitrile, and the like. Examples of the maleimide unit include maleimide, N-methylmaleimide, N-ethylmaleimide, N-propylmaleimide, N-isopropylmaleimide, N-cyclohexylmaleimide, N-phenylmaleimide, N-(p-bromophenyl)maleimide, N-(chlorophenyl)maleimide, and the like. Examples of the unsaturated dicarboxylic acid monomer include maleic acid, maleic acid monoethyl ester, itaconic acid, phthalic acid, and the like. Examples of the other vinyl monomers include acrylamide, methacrylamide, N-methylacrylamide, butoxymethylacrylamide, N-propylmethacrylamide, N-vinyldiethylamine, N-acetylvinylamine, allylamine, methallylamine, N-methylallylamine, p-aminostyrene, 2-isopropenyl-oxazoline, 2-vinyl-oxazoline, 2-acroyl-oxazoline, 2-styryl-oxazoline, and the like. One or more of these monomers can be used.

Specific preferred examples of the core-shell type rubber (D) include the following:
one in which the core portion is a butyl acrylate polymer, and the shell layer is a methyl methacrylate/glycidyl methacrylate copolymer; one in which the core portion is a dimethylsiloxane/butyl acrylate copolymer, and the shell layer is a methyl methacrylate/glycidyl methacrylate copolymer; one in which the core portion is a butyl acrylate polymer, and the shell layer is a methyl methacrylate polymer; and one in which the core portion is a dimethylsiloxane/butyl acrylate copolymer, and the shell layer is a methyl methacrylate polymer. Of these, preferred is one in which the core portion is a butyl acrylate polymer, and the shell layer is a methyl methacrylate/glycidyl methacrylate copolymer, or one in which the core portion is a butyl acrylate polymer, and the shell layer is a methyl methacrylate polymer, because it allows for a marked improvement in appearance. The most preferred is one in which the core portion is a butyl acrylate polymer, and the shell layer is a methyl methacrylate/glycidyl methacrylate copolymer.

The median size of the particles of the core-shell type rubber (D) is not particularly limited. However, the median size is preferably 0.05 µm or more, more preferably 0.1 µm or more, and still more preferably 0.2 µm or more. At the same time, the median size of the particles of the core-shell type rubber (D) is preferably 1 µm or less, more preferably 0.8 µm or less, and still more preferably 0.6 µm or less. The median size of the core-shell type rubber as used herein refers to a 50% volume average particle diameter in a cumulative particle size distribution curve obtained by a high-precision particle diameter distribution measuring apparatus (Multisizer; manufactured by Beckman Coulter, Inc.). Specifically, 0.1 g of sample is predispersed in 10 ml of a 0.1% nonionic surface active agent, using a touch mixer and ultrasonic wave, and the resultant is dropped with a syringe into a beaker filled with a measuring electrolyte solution attached to the measuring apparatus, while gently stirring. The reading of the density meter on the screen of the measuring apparatus is adjusted to about 10%. Subsequently, the following information is input to the measuring apparatus: aperture size: 50 µm; Current: 800; Gain: 4; and Polarity: +; and a measurement is carried out manually. During the measurement, the content of the beaker is gently stirred so as not to generate bubbles, and the measurement is terminated when 100,000 particles of the core-shell type rubber are counted. The median size is calculated from the thus obtained particle size distribution.

In the core-shell type rubber (D), the mass ratio of the core portion to the shell layer is not particularly limited. However, the amount of the core portion is preferably 50 parts by mass or more, more preferably 55 parts by mass or more, and still more preferably 60 parts by mass or more, with respect to 100 parts by mass of the total amount of the core-shell type rubber. At the same time, the amount of the core portion is preferably 95 parts by mass or less, more preferably 93 parts by mass or less, and more preferably 90 parts by mass or less, with respect to the total amount of the core-shell type rubber.

The blending amount of the core-shell type rubber (D) to be included in the resin composition is preferably 2 parts by mass or more, with respect to 100 parts by mass of the total amount of the amorphous resin (A) and the polylactic acid resin (B). When the blending amount of the core-shell type rubber (D) is within the above range, the impact resistance of the resulting winding core can be further improved. At the same time, the blending amount of the core-shell type rubber (D) is preferably 10 parts by mass or less, and more preferably 6 parts by mass or less, with respect to 100 parts by mass of the total amount of the amorphous resin (A) and the polylactic acid resin (B). When the blending amount of the core-shell type rubber (D) is 10 parts by mass or less, it is possible to inhibit gelation due to the influence of glycidyl groups contained in the outermost layer, thereby improving the surface smoothness and the cylindricity of the resulting winding core.

The core-shell type rubber (D) may be a commercially available product that satisfies the above described requirements, or it can be produced by a known method. Examples of the commercially available product include "METABLEN" (registered trademark) manufactured by Mitsubishi Rayon Co., Ltd.; "Kane-Ace" (registered trademark) manufactured by Kaneka Corporation; "PARALOID" (registered trademark) manufactured by Rohm and Haas Company; "STAPHYROID" manufactured by Takeda Pharmaceutical Company Limited; and "PARAFACE" (registered trademark) manufactured by Kuraray Co., Ltd. One or more than one of these monomers can be used. In particular, preferred is "PARALOID EXL 2314" manufactured by Rohm and Haas Company, which contains a butyl acrylate unit in the core portion, and a glycidyl methacrylate unit in the outermost layer, but not limited thereto.

### < Methacrylic resin (E) >

In the present invention, the resin composition can further include a methacrylic resin (E). It is also possible that the resin composition include the methacrylic resin (E) in combination with the core-shell type rubber (D).

It is preferred that the resin composition further include the methacrylic resin (E), because the dispersed state of the amorphous resin (A) and the polylactic acid resin (B), and of the core-shell type rubber (D) which is included as necessary, can be stabilized, thereby allowing the resulting winding core to have a further improved deflection reducing property in a long length product and lightweight property.

The methacrylic resin (E) is a polymer which is obtainable from a (meth)acrylic acid monomer and/or an alkyl (meth)acrylate monomer. When the methacrylic resin includes a structure derived from an aromatic vinyl monomer, due to copolymerization, the methacrylic resin is classified as the styrene resin (a1). When the methacrylic resin does not include a structure derived from an aromatic vinyl monomer, but has a structure of the core-shell type rubber as a result of a (meth)acrylic acid monomer and/or an alkyl methacrylate monomer being grafted to a rubber, the methacrylic resin is classified as the core-shell type rubber (D).

Examples of the (meth)acrylic acid monomer and the alkyl (meth)acrylate monomer include methacrylic acid, methyl methacrylate, ethyl methacrylate, butyl methacrylate, cyclohexyl methacrylate, hydroxyethyl methacrylate, allyl methacrylate, and the like. One or more of these can be used.

Further, it is also possible to use a copolymer containing a ring structure, such as a lactone ring, maleic anhydride or glutaric anhydride, in its skeleton.

The methacrylic resin (E) which can be used in the present invention is preferably a polymethyl methacrylate resin which is made primarily from a methyl methacrylate monomer, more preferably a polymethyl methacrylate resin which contains 70% by mass or more of a unit derived from methyl methacrylate, and still more preferably a polymethyl methacrylate (PMMA) resin which is a homopolymer of methyl methacrylate.

Further, the molecular weight and the molecular weight distribution of the methacrylic resin (E) are not particularly limited, as long as the methacrylic resin (E) is substantially mold-processable. However, the methacrylic resin (E) preferably has a weight average molecular weight of 1,000 or more, and more preferably 30,000 or more, in terms of molding processability. At the same time, the methacrylic resin (E) preferably has a weight average molecular weight of 450,000 or less, more preferably 200,000 or less, and still more preferably 150,000 or less. The weight average molecular weight as used herein refers to a weight average molecular weight in terms of polymethyl methacrylate (PMMA), as measured by GPC using tetrahydrofuran as a solvent.

The blending amount of the methacrylic resin (E) to be included in the resin composition is preferably 2 parts by mass or more with respect to 100 parts by mass of the total amount of the amorphous resin (A) and the polylactic acid resin (B). When the blending amount of the methacrylic resin (E) is within the above range, the dimensional stability of the resulting winding core can be further improved. At the same time, the blending amount of the methacrylic resin (E) is preferably 10 parts by mass or less, and more preferably 6 parts by mass or less, with respect to 100 parts by mass of the total amount of the amorphous resin (A) and the polylactic acid resin (B). When the blending amount of the methacrylic resin (E) is 10 parts by mass or less, the deflection reducing property in a long length product can further be improved. In addition, the resulting product has a high thermal deformation temperature, and the heat resistance (thermal deformation temperature) thereof as measured in accordance with ISO 75 (load: 0.45 MPa) can be maintained at 80°C or higher, resulting in an improved practicality.

In terms of dimensional stability, it is preferred that the resin composition further include the methacrylic resin (E) in addition to the amorphous resin (A), the polylactic acid resin (B), an inorganic filler (C) and the core-shell type rubber (D), and that the total amount of the core-shell type rubber (D) and the methacrylic resin (E) is from 4 to 20 parts by mass, and more preferably from 4 to 12 parts by mass, with respect to 100 parts by mass of the total amount of the amorphous resin (A) and the polylactic acid resin (B).

### < Inorganic filler (C) >

In the present invention, it is preferred to incorporate the inorganic filler (C) into the resin composition of the present invention containing the amorphous resin (A) and the polylactic acid resin (B).

Incorporation of the inorganic filler serves to further improve the rigidity (deflection reducing property in a long length product) and the dimensional stability. Thus, in the winding core of the present invention, the vibration generated due to the rotation of the winding core when winding a sheet or a film is reduced, and there is less risk that the sheet or the film is deformed due to the irregularities of the core. As a result, the present winding core can be formed to have a longer length than that of a conventional winding core. In addition, the improvement in the rigidity (deflection reducing property in a long length product) allows for reducing the thickness of the resulting molded article, thereby enabling to further reduce the weight of the winding core.

Specific examples of the inorganic filler (C) include talc, wollastonite, kaolinite, montmorillonite, mica, synthetic mica, clay, zeolite, silica, graphite, carbon black, zinc oxide, magnesium oxide, calcium oxide, titanium oxide, calcium sulfide, boron nitride, magnesium carbonate, calcium carbonate, barium sulfate, aluminum oxide, and the like. In terms of dimensional stability, and of maintaining the appearance of the resulting molded article, talc or wollastonite is preferred.

The blending amount of the inorganic filler (C) to be included in the resin composition which is the material of the winding core of the present invention, is preferably 10 parts by mass or more with respect to 100 parts by mass of the total amount of the amorphous resin (A) and the polylactic acid resin (B). When the blending amount of the inorganic filler (C) is within the above range, it is possible to improve the dimensional stability, represented by the cylindricity, of the resulting winding core. At the same time, the blending amount of the inorganic filler (E) is preferably 40 parts by mass or less, and more preferably 25 parts by mass or less, with respect to 100 parts by mass of the total amount of the amorphous resin (A) and the polylactic acid resin (B). When the blending amount of the inorganic filler (C) is within the above range, the weight of the resulting winding core is further reduced.

### < Other additives >

In the present invention, the resin composition can include a polymer containing a carbodiimide group in its molecule, because it allows for improving the durability of the resultant due to the inhibition of hydrolysis. The polymer containing a carbodiimide group may be one which is already available in the market. In particular, "CARBODILITE" (registered trademark) LA-1 manufactured by Nisshinbo Holdings Inc. or the like can be preferably used. The blending amount of the above described polymer is preferably in the range of from 0.01 to 10 parts by mass, and more preferably within the range of from 0.05 to 5 parts by mass, with respect to 100 parts by mass of the total amount of the amorphous resin (A) and the polylactic acid resin (B).

In the present invention, the resin composition can include a stabilizer (an antioxidant, a UV absorber, a weather resistant agent, etc.), a lubricant, a mold release agent, a flame retardant, a coloring agent containing a dye or a pigment, an antistatic agent, a foaming agent, and/or the like, to the extent that the effect of the present invention is not impaired.

In the present invention, the resin composition can further include at least one type of other crystalline thermoplastic resins (such as polyamide resins, polyphenylene sulfide resins, polyether ether ketone resins, polyester resins other than the polylactic acid resin (B), polyether sulfone resins, polyacetal resins, polyimide resins, polyetherimide resins, aromatic and aliphatic polyketone resins, fluororesins, polyvinylidene chloride resins, vinyl ester resins, cellulose acetate resins, and polyvinyl alcohol resins), to the extent that the effect of the present invention is not impaired. Incorporation of any of these resins to the resin composition allows for producing a molded article having excellent properties.

### < Method of manufacturing resin composition >

There is no particular limitation on the method of manufacturing the resin composition which is used as the material of the winding core of the present invention. Examples thereof include a method in which each of the raw materials are supplied into a generally known melt blender, such as a single-screw or a twin-screw extruder, a Banbury mixer, a kneader, or a mixing roll, followed by heating and melt blending. The melt blending is preferably performed at a temperature of from 190 to 250°C. One of the methods of manufacturing the resin composition is one in which the order of mixing the raw materials is not particularly limited, and all the raw materials are mixed at once, followed by melt blending. Another method is one in which a part of the raw materials is mixed and then melt blended, and subsequently, the remaining raw materials are added to the resultant, followed by melt blending. Still another method is one in which a part of the raw materials is mixed and then melt blended by a single-screw or a twin-screw extruder, and subsequently, the remaining raw materials are added into the extruder using a side feeder, followed by mixing. Any of the above described methods can be used. Regarding the additive components which are incorporated into the resin composition in a small amount, it is of course possible to add them after mixing and pelletizing other components by a method such as any of the above described methods, and before forming the resultant into a winding core.

### < Winding core >

The winding core of the present invention is useful for winding a sheet, film, tape or the like into a roll, to allow transportation, storage and the like thereof. In particular, the deflection or flattening deformation is less likely to occur, even in cases where the winding core has a long length. The winding core of the present invention is preferred, because there is no need to provide ribs or the like to augment the strength or the dimensional accuracy of the core, and it can be used as a winding core for winding a high-precision film, even when it is formed in a simple cylindrical shape. The present winding core is useful particularly when it is used for winding a high-precision optical film, since the film is less likely to be creased, due to the dimensional stability of the winding core.

It is preferred that the interior of the winding core of the present invention be hollow, in terms of lightweight property. Further, it is also preferred that at least the portion of the winding core which serves to wind a material to be wound, of the exterior portions thereof, be in the shape of a cylinder.

The winding core preferably has a length [L] of from 30 cm to 5 m, an outer diameter of from 20 mm to 200 mm, and a thickness of from 3 mm to 35 mm, because the effect of the present invention can be markedly observed when the winding core has such a shape.

In particular, the winding core preferably has a length [L] of from 1 to 4 m, since the deflection reducing property in a long length product is most pronouncedly demonstrated at that length. Further, the winding core preferably has an outer diameter of from 75 to 150 mm, since a favorable balance between the lightweight property and the amount of winding can be obtained. Still further, the winding core preferably has a thickness of from 5 to 20 mm, since a favorable balance between the rigidity and the lightweight property can be easily obtained.

In order to obtain the effect of the present invention particularly significantly, it is preferred that the ratio (length [L]/inner diameter [D]) of the length [L] to the inner diameter [D] of the winding core be 2 or more, and more preferably 5 or more. The winding core of the present invention, which is composed of a thermoplastic resin, has an excellent dimensional stability, and is less susceptible to deflection or deformation.

In a conventional winding core, there is a tendency that, as the length [L] is increased, the dimensional stability of the winding core is decreased, as a result of which irregularities in the winding core are gradually generated during the process of winding a sheet or a film, thereby resulting in a deformation of the sheet or the film. Therefore, the length of a sheet or a film to be wound to the winding core has been limited. Further, as the length [L] is increased, the deflection or the deformation of the winding core is more likely to occur, yielding to the weight of a sheet or a film. Consequently, when winding a sheet or a film to the winding core, the rotational speed of the core cannot be increased in order to inhibit the vibration, and in addition, it is necessarily to set an upper limit on the weight of the film or the sheet to be wound.

Since the winding core of the present invention has an excellent dimensional stability, and thus is less susceptible to deflection or deformation, the winding core is capable of winding a large weight of a sheet or a film without the occurrence of deformation or causing vibration, even when the winding core is formed to have a long length which has caused problems in a conventional winding core. Accordingly, the present winding core is capable of winding a longer length of a sheet or a film, for example, thereby serving to reduce the frequency of replacing the winding core. In addition, it is also capable of winding a sheet or a film having a wider width. Further, since the present winding core allows for winding at a higher speed, the speed of producing a rolled sheet or film can be increased. These serve to improve the production efficiency of a sheet or a film.

Further, since the winding core of the present invention is less susceptible to deflection or deformation, it is possible to reduce the thickness of the present winding core when it has the same length as a conventional winding core. This allows for further reducing the weight of the winding core, thereby enabling to reduce the load during the transportation.

The winding core of the present invention can be obtained by molding the above described resin composition by an arbitrary method, such as a known injection molding, extrusion molding, inflation molding, or blow molding method. The resin composition of the present invention is capable of providing a molded article having a favorable dimensional accuracy, when subjected to a molding method (such as extrusion molding or injection molding) in which the resin composition in a melted state is allowed to flow, and then cooled and solidified in a mold. When subjected to extrusion molding, in particular, it is possible to obtain a winding core having a high cylindricity. This effect is shown particularly significantly in a winding core which is formed to have the above described preferred values of the length and the thickness, or the above described preferred ratio of the length to the inner diameter.

### EXAMPLES

Raw materials used in Examples, manufacturing methods thereof, and the like will be described below.

### [Raw materials used]

### [Amorphous resin (A)]

### Amorphous styrene resin (a1)

### ABS resin (a1-1)

A quantity of 50 parts by mass (in terms of solid content) of polybutadiene (weight average particle diameter: 0.35 µm, gel content: 75%) ("Nipol LX111A2" manufactured by Zeon Corporation), 0.5 parts by mass of potassium oleate, 0.5 parts by mass of glucose, 0.5 parts by mass of sodium pyrophosphate 1, 0.005 parts by mass of ferrous sulfate, and 120 parts by mass of deionized water were charged into a polymerization container, and the resultant was heated to 65°C while stirring. The time point at which the internal temperature of the resultant reached 65°C was taken as the initiation of polymerization, and 35 parts by mass of styrene, 15 parts by mass of acrylonitrile, and 0.3 parts by mass of t-dodecyl mercaptan were added to the resultant by continuous dropping over 5 hours. Concurrently, an aqueous solution composed of 0.25 parts by mass of cumene hydroperoxide, 2.5 parts by mass of potassium oleate, and 25 parts by mass of pure water was added by continuous dropping over 7 hours, to complete the reaction. The thus obtained graft copolymer latex was solidified with sulfuric acid, and neutralized with sodium hydroxide. The resultant was then washed, filtered, and dried to obtain a product in the form of a powder. The resulting graft copolymer had a graft ratio of 50%. The weight average molecular weight of the portion of the graft copolymer soluble in methyl ethyl ketone was 83,000, and no melting peak was observed in the DSC curve.

### AS resin (a1-2)

Into a stainless steel autoclave having a capacity of 20 L and equipped with a baffle and a Pfaudler impeller, a solution obtained by dissolving 0.05 parts by mass of methyl methacrylate/acrylamide copolymer (80% by mass /20% by mass) which had been prepared by suspension polymerization, in 165 parts by mass of ion exchanged water, was added, followed by stirring at 400 rpm. Then the system was replaced with nitrogen gas. Subsequently, 70 parts by mass of styrene, 30 parts by mass of acrylonitrile, 0.33 parts by mass of t-dodecyl mercaptan, and 0.31 parts by mass of 2,2'-azobisisobutyronitrile were added to the reaction system while stirring. The resultant was then heated to 60°C to initiate polymerization. After increasing the reaction temperature to 65°C over 30 minutes, the temperature was further increased to 100°C over 120 minutes. Thereafter, the reaction system was cooled, and the resulting polymer was separated, washed, and dried according to ordinary methods, to obtain a polymer in the form of beads. The thus obtained AS resin (a1-2) had a weight average molecular weight of 134,000, and no melting peak was observed in the DSC curve.

### Polycarbonate (a2)

"Panlite L-1225WX" (a polycarbonate which is obtained by melt polymerization of bisphenol A and phosgene, and which has a terminal phenolic hydroxyl group content of 1.0 × 10⁻² mol per 1 mol of bisphenol A skeleton, and a number average molecular weight of 19,500) manufactured by Teijin Limited was used. No melting peak was observed in the DSC curve.

### [Polylactic acid resin (B)]

A polylactic acid resin having a D-polylactic acid content of 4% and an L-polylactic acid content of 96%, and a weight average molecular weight in terms of PMMA as measured by GPC of 220,000.

### [Inorganic filler (C)]

Talc (P-6, manufactured by Nippon Talc Co., Ltd.) (E-1).

Wollastonite ("NYGLOS M15", manufactured by Hayashi Kasei Co., Ltd.).

### [Core-shell type rubber (D)]

"METABLEN" (registered trademark) S-2001 (core-shell type rubber; core: a copolymerized product of butyl acrylate/dimethylsiloxane, shell layer: methyl methacrylate, core /shell layer = 80 parts by mass /20 parts by mass, median size: 0.27 µm), manufactured by Mitsubishi Rayon Co., Ltd.

### [Methacrylic resin (E)]

"SUMIPEX" (registered trademark) MH (polymethyl methacrylate, weight average molecular weight: 100,000), manufactured by Sumitomo Chemical Co., Ltd.

### [Nylon resin (F)]

Nylon 6 having a melting point of 222°C, relative viscosity (measured at 25°C in a 1% solution of concentrated sulfuric acid) of 2.70.

### [Examples 1 to 15 and Comparative Examples 1 to 6]

The above described materials were dry-blended in advance at the ratios shown in Tables 1 to 3. Each of the mixtures was melt blended using a screw type twin-screw extruder (ZSK-57; manufactured by Werner & Pfleiderer Industrial Bakery Technologies) whose cylinder temperature was set to 220°C (at the lower side of the hopper) to 250°C (at the side of the discharge port), and then pelletized to obtain pellets.

These pellets were subjected to pre-drying in a hot air dryer controlled at 80°C, for 3 hours or more. Subsequently, the pellets were subjected to extrusion molding using an extrusion molding machine, under cylinder temperature conditions of 220°C (at the lower side of the hopper) to 250°C (at the side of the discharge port), to obtain winding cores of respective Examples and Comparative Examples. The dimensions of the winding cores will be described later. The following tests for evaluation were carried out for each of the thus obtained winding cores.

### [Evaluation methods]

### [Lightweight property]

A plurality of winding cores varying in thickness, and having an outer diameter of 153 mm and a length of 300 mm, were prepared. Each of the winding cores was compressed with an indenter having a length of 300 mm, at a rate of 10 mm/min in a circumferential direction. At this time, a winding core having a certain thickness was selected, in which a load of 10 kgf/300 mm was required to cause a deformation of 1 mm. The ratio of the mass of the thus selected winding core having the certain thickness, to the mass of the winding core of Comparative Example 2 composed of an ABS resin, was obtained. A smaller value of the above mentioned ratio indicates a better lightweight property of the winding core.

### [Dimensional stability: cylindricity]

A winding core having an outer diameter of 153 mm, an inner diameter [D] of 141 mm, a length [L] of 300 mm, and a ratio length [L]/thickness (D) of 2.1 was used. A stand equipped with a microindicator was placed on a surface table, and moved in the direction of axis, with a probe placed on an upper surface of the winding core, to carry out measurements in various measurement planes over the total length of the winding core. A 1/2 value of the maximum difference in the measured readings was evaluated as the cylindricity (mm) of the winding core. A smaller numerical value indicates a better cylindricity.

### [Dimensional stability: deflection reducing property in long length product]

A core material having an inner diameter [D] of 153 mm, a thickness of 6.5 mm, a length of 2,500 mm, and a ratio length [L]/inner diameter [D] of 16.3 was used. A weight of 1,000 kg was placed in the central portion of the winding core, namely, at a position 500 mm from both the supports supporting the core which had been disposed 1,000 mm apart. A thread was stretched over the upper surface of the winding core, and the gap (deflection) between the thread and the upper surface of the winding core in the central portion was measured. A smaller numerical value indicates a better deflection reducing property in a long length product.

The results are shown in Tables 1 to 3.
[Table 1]

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Amorphous resin (A) | Polycarbonate resin (a2) | % by mass | 60 | 60 | 60 | 60 | | 40 | 60 | 60 | 60 |
| | ABS resin (a1-1) (Styrene resin) | % by mass | | | | | 60 | | | | |
| | ABS resin (a1-2) (Styrene resin) | % by mass | | | | | | 20 | | | |
| Polylactic acid resin (B) | | % by mass | 40 | 40 | 40 | 40 | 40 | 40 | 40 | 40 | 40 |
| Total amount of components (A) and (B) | | parts by mass | 100 | 100 | 100 | 100 | 100 | 100 | 100 | 100 | 100 |
| Inorganic filler (C) | Talc (C-1) | parts by mass | 10 | 20 | 40 | 20 | | | | | |
| | Wollastonite (C-2) | parts by mass | | | | | | | | | |
| Core-shell type rubber (D) | | parts by mass | 3 | 3 | 3 | | | | 2 | 3 | 10 |
| Acrylic Resin (E) | | parts by mass | | 2 | | | 2 | 2 | | 2 | |
| Lightweight property | | - | 0.83 | 0.72 | 0.86 | 0.89 | 0.78 | 0.80 | 0.80 | 0.74 | 0.88 |
| Cylindricity | | mm | 0.008 | 0.003 | 0.005 | 0.007 | 0.009 | 0.008 | 0.008 | 0.006 | 0.008 |
| Deflection reducing property in a long | | mm | 1.4 | 0.8 | 1.2 | 1.8 | 2.2 | 2.0 | 2.2 | 1.8 | 2.5 |

[Table 2]

**[Table 2]**

| | | | Example 10 | Example 11 | Example 12 | Example 13 | Example 14 | Example 15 |
|---|---|---|---|---|---|---|---|---|
| Amorphous resin (A) | Polycarbonate resin (a2) | % by mass | 80 | 50 | 60 | | 40 | 40 |
| | ABS resin (a1-1) (Styrene resin) | % by mass | | | | 60 | | |
| | ABS resin (a1-2) (Styrene resin) | % by mass | | | | | 20 | |
| Polylactic acid resin (B) | | % by mass | 20 | 50 | 40 | 40 | 40 | 40 |
| Total amount of components (A) and (B) | | parts by mass | 100 | 100 | 100 | 100 | 100 | 100 |
| Inorganic filler (C) | Talc (C-1) | parts by mass | | | | | | |
| | Wollastonite (C-2) | parts by mass | | | | | | 20 |
| Core-shell type rubber (D) | | parts by mass | | | | | | |
| Acrylic Resin (E) | | parts by mass | | | | | | |
| Lightweight property | | - | 0.91 | 0.90 | 0.90 | 0.91 | 0.92 | 0.89 |
| Cylindricity | | mm | 0.009 | 0.008 | 0.009 | 0.010 | 0.009 | 0.008 |
| Deflection reducing property in a long | | mm | 2.8 | 2.6 | 2.7 | 2.9 | 2.8 | 1.8 |

[Table 3]

**[Table 3]**

| | | | Comparative Example 1 | Comparative Example 2 | Comparative Example 3 | Comparative Example 4 | Comparative Example 5 | Comparative Example 6 |
|---|---|---|---|---|---|---|---|---|
| Amorphous resin (A) | Polycarbonate resin (a2) | % by mass | 100 | | | | 100 | |
| | ABS resin (a1-1) (Styrene resin) | % by mass | | 100 | | | | |
| | ABS resin (a1-2) (Styrene resin) | % by mass | | | | | | |
| Polylactic acid resin (B) | | % by mass | | | 100 | 100 | | 100 |
| Total amount of components (A) and (B) | | parts by mass | 100 | 100 | 100 | 100 | 100 | 100 |
| Inorganic filler (C) | | parts by mass | | | | | 20 | 20 |
| Nylon resin (F) | | parts by mass | | | | 150 | | |
| Lightweight property | | - | 1.18 | 1.00 | 1.02 | 1.10 | 1.48 | 1.50 |
| Cylindricity | | mm | 0.032 | 0.029 | 0.030 | 0.043 | 0.024 | 0.025 |
| Deflection reducing property in a long | | mm | 4.2 | 4.8 | 3.8 | 3.5 | 3.6 | 3.3 |

As can be seen from the results shown in Tables 1 to 3, the winding cores of Examples 1 to 15 have a better lightweight property and dimensional stability as compared to the winding cores of Comparative Examples 1 to 6.

The winding cores of Examples 10 to 14 are those obtained from a resin composition composed of the amorphous resin and the polylactic acid resin. The winding cores of Examples 10 to 14 are compared with the winding core of Comparative Example 1 consisting of the amorphous resin, and the winding core of Comparative Example 3 consisting of the polylactic acid resin. The comparison reveals that the winding cores obtained from a resin composition including specified amounts of the amorphous resin and the polylactic acid resin have an improved cylindricity, an improved deflection reducing property in a long length product, and an enhanced rigidity. Since these improvements allow for reducing the thickness of the winding cores, these winding cores also have an excellent lightweight property.

The winding cores of Examples 1 to 4 and Example 15 are those obtained from a resin composition composed of the amorphous resin, the polylactic acid resin, and the inorganic filler. The winding cores of Examples 1 to 4 and 15 are compared with the winding cores of Examples 5 to 9. The comparison reveals that the winding cores of Examples 1 to 4 and 15 have a better deflection reducing property in a long length product, as compared to the winding cores of Examples 5 to 9.

The winding cores of Examples 7 and 9 are those obtained from a resin composition which further includes the core-shell type rubber, in addition to the amorphous resin and the polylactic acid resin. It can be seen that these winding cores have a further improved cylindricity as compared to the winding core of Example 12.

The winding cores of Examples 5 and 6 are those obtained from a resin composition which further includes the methacrylic resin, in addition to the amorphous resin and the polylactic acid resin. It can be seen that the winding cores of Examples 5 and 6 have a further improved lightweight property and deflection reducing property in a long length product, in particular, as compared to the winding cores of Examples 13 and 14.

The winding core of Example 8 is one obtained from a resin composition which further includes the core-shell type rubber and the methacrylic resin, in addition to the amorphous resin and the polylactic acid resin. It can be seen that the winding core of Example 8 has a further improved lightweight property, cylindricity, and deflection reducing property in a long length product, as compared to the winding cores of Examples 5, 7, 9 and 12.

The winding cores of Examples 4 and 15 are those obtained from a resin composition which further includes the inorganic filler, in addition to the amorphous resin and the polylactic acid resin. It can be seen that these winding cores have a further improved deflection reducing property in a long length product, in particular, as compared to the winding core of Example 12.

The winding cores of Examples 1 and 3 are those obtained from a resin composition which further includes the core-shell type rubber and the inorganic filler, in addition to the amorphous resin and the polylactic acid resin. It can be seen that these winding cores have an improved lightweight property as compared to the winding cores of Examples 4 and 15, and an improved deflection reducing property in a long length product, as compared to winding core of Example 7.

The winding core of Example 2 is one obtained from a resin composition composed of the amorphous resin, the polylactic acid resin, the core-shell type rubber, the methacrylic resin, and the inorganic filler. It can be seen that this winding core has the most improved lightweight property and dimensional stability.

Accordingly, the winding cores of Examples 1 to 15 are capable of winding a film having a long length, or the like, and the winding cores themselves are lightweight, and thus serve to reduce the energy required for winding, and the energy required for transportation.

### INDUSTRIAL APPLICABILITY

The winding core of the present invention can be suitably used for winding a sheet, film, tape or the like, since it is lightweight, and has an excellent dimensional stability, particularly, an excellent dimensional accuracy and deflection reducing property in a long length product.

## Claims

1. A winding core obtained by molding a resin composition comprising: at least one type of amorphous resin (A) selected from a styrene resin, a polycarbonate, a polyarylate, a polyphenylene oxide and a polysulfone; a polylactic acid (B); and an inorganic filler (C);
wherein the resin composition comprises: from 50 to 80 parts by mass of the amorphous resin (A), from 20 to 50 parts by mass of the polylactic acid resin (B), and from 10 to 40 parts by mass of the inorganic filler (C) (wherein the total amount of the amorphous resin (A) and the polylactic acid (B) is 100 parts by mass).

2. The winding core according to claim 1, wherein the inorganic filler (C) comprises talc.

3. The winding core according to claim 1 or 2, wherein the ratio of length [L] to inner diameter [D] (length [L]/inner diameter [D]) of the winding core is 2 or more.

4. A winding core obtained by molding a resin composition comprising: at least one type of amorphous resin (A) selected from a styrene resin, a polycarbonate, a polyarylate, a polyphenylene oxide and a polysulfone; a polylactic acid (B); and an inorganic filler (C);
wherein the ratio of length [L] to inner diameter [D] (length [L]/inner diameter [D]) of the winding core is 2 or more; and
wherein the resin composition comprises: from 50 to 80 parts by mass of the amorphous resin (A), and from 20 to 50 parts by mass of the polylactic acid resin (B) (wherein the total amount of the amorphous resin (A) and the polylactic acid (B) is 100 parts by mass).

5. The winding core according to any one of claims 1 to 4, wherein the resin composition further comprises from 2 to 10 parts by mass of a core-shell type rubber (D).

6. The winding core according to any one of claims 1 to 5, wherein the resin composition further comprises from 2 to 10 parts by mass of a methacrylic resin (E).

7. The winding core according to any one of claims 1 to 6, wherein the amorphous resin (A) comprises as an essential component a styrene resin (a1) or a polycarbonate (a2).

8. A method of manufacturing a winding core, the method comprising the steps of:
obtaining a resin composition comprising: at least one type of amorphous resin (A) selected from a styrene resin, a polycarbonate, a polyarylate, a polyphenylene oxide and a polysulfone; a polylactic acid resin (B); and an inorganic filler (C); by mixing from 50 to 80 parts by mass of the amorphous resin (A), from 20 to 50 parts by mass of the polylactic acid resin (B), and from 10 to 40 parts by mass of the inorganic filler (C) (wherein the total amount of the amorphous resin (A) and the polylactic acid (B) is 100 parts by mass); and
molding the resin composition to obtain a winding core.

9. A method of manufacturing a winding core, the method comprising the steps of:
obtaining a resin composition comprising: at least one type of amorphous resin (A) selected from a styrene resin, a polycarbonate, a polyarylate, a polyphenylene oxide and a polysulfone; and a polylactic acid resin (B); by mixing from 50 to 80 parts by mass of the amorphous resin (A), and from 20 to 50 parts by mass of the polylactic acid resin (B) (wherein the total amount of the amorphous resin (A) and the polylactic acid (B) is 100 parts by mass); and
molding the resin composition to obtain a winding core;
wherein the ratio of length [L] to inner diameter [D] (length [L]/inner diameter [D]) of the winding core is 2 or more.

10. The method of manufacturing a winding core according to claim 8 or 9, wherein in the step of obtaining a resin composition, from 2 to 10 parts by mass of a core-shell type rubber (D) is further incorporated into the resin composition.

11. The method of manufacturing a winding core according to any one of claims 8 to 10, wherein in the step of obtaining a resin composition, from 2 to 10 parts by mass of a methacrylic resin (E) is further incorporated into the resin composition.

12. The method of manufacturing a winding core according to any one of claims 8 to 11, wherein the amorphous resin (A) comprises as an essential component a styrene resin or a polycarbonate.

13. The method of manufacturing a winding core according to any one of claims 8 to 12, wherein the winding core is molded by an extrusion molding method.
